(19) Europäisches Patentamt

European Patent Office

Office européen des brevets

(11) Veröffentlichungsnummer: **0 238 942
B1**

(12) **EUROPÄISCHE PATENTSCHRIFT**

(45) Veröffentlichungstag der Patentschrift: **25.04.90**

(21) Anmeldenummer: **87103582.0**

(22) Anmeldetag: **12.03.87**

(51) Int. Cl.⁵: **G 01 D 5/24**

(54) **Sensorgesteuertes hydraulisches System mit elektroviskosen Flüssigkeiten.**

(30) Priorität: **22.03.86 DE 3609861**

(43) Veröffentlichungstag der Anmeldung:
**30.09.87 Patentblatt 87/40**

(45) Bekanntmachung des Hinweises auf die
Patenterteilung:
**25.04.90 Patentblatt 90/17**

(84) Benannte Vertragsstaaten:
**AT BE CH DE ES FR GB IT LI NL SE**

(56) Entgegenhaltungen:
**EP-A-0 137 112
DE-A-3 225 554**

(73) Patentinhaber: **BAYER AG
D-5090 Leverkusen 1 Bayerwerk (DE)**

(72) Erfinder: **Oppermann, Günter, Dr.
Fichtestrasse 50
D-5090 Leverkusen (DE)**
Erfinder: **Feld, Fritz
Obere Lindenstrasse 29
D-5090 Leverkusen 3 (DE)**

**Beschreibung**

Die Erfindung betrifft eine Vorrichtung zur Messung und Regelung der Bewegung mechanischer Bauelemente in hydraulischen, mit eleketroviskosen Flüssigkeiten (EVF) arbeitenden Systemen. Eine solche Vorrichtung besteht im Prinzip aus einem mit Elektroden versehenen, mit der elektroviskosen Flüssigkeit gefüllten Strömungskanal oder aus einem geschlossenen System mit relativ zueinander bewegten Elektroden, wobei in beiden Fällen an den Elektroden eine elektrische Spannung anliegt, Derartige Bauelemente finden Verwendung in elektrisch gesteuerten aktiven Schwingungsdämpfern, Stoßdämpfern, Lagerungen oder Kupplungen.

Elektroviskose Flüssigkeiten (EVF) sin Dispersionen feinverteilter hydrophiler Festoffe in hydrophoben elektrisch nicht leitenden Ölen. Unter dem Einfluß eines hinreichend starken elektrischen Feldes kann die Viskosität der EVF sehr schnell und reversibel vom flüssigen bis zum plastischen oder festen Zustand verändert werden. Zur Anregung der EVF kann man sowohl elektrische Gleich- als auch Wechselfelder benutzen. Die dazu benötigten elektrischen Leistungen sin verhältnismäßig niedrig.

Die Anwendungsmöglichkeiten der EVF in hydraulischen Systemen sin grundsätzlich bekannt, beispielwise in Hydraulikventilen ohne bewegte Teile und in Hydraulikzylindern (z.B. US—PS 2.661.596), in Vibratoren (z.B. US—Patent 3,984,086), Viskositätskupplungen (z.B. US—Patent 2,417,850 und 2,661,825, DE—OS 3.128.959), Stoßdämpfern (z.B. US—Patent 3,207,269) oder Zweikammer-Motorlager mit hydraulischer Dämpfung (EP—OS 0.137.112).

Alle diese hydraulischen Systeme sind dadurch charakterisiert, daß sie mindestens zwei feste oder bewegliche beliebig gestaltete Elektrodenflächen besitzen, zwischen denen sich die EVF befindet. Durch Anlegen einer veränderbaren elektrischen Spannung kann z.B. die Strömungsgeschwindigkeit und damit der Druckabfall der EVF zwischen festen Elektroden oder er Kraftschluß zwischen beweglichen Elektrodenflächen in weiten Bereichen gesteuert werden. Dazu können z.B. handelsübliche Hochspannungsgeräte mit fester oder veränderbarer Ausgangsspannung benutzt werden.

In vielen praktischen Anwendungsfällen soll eine selbsttätige Regelung des hyraulischen Systems in Abhängigkeit vom jeweiligen Beweungszustand erreicht werden. Zum Beispiel soll bei einem Stoß- oder Schwingungsdämpfer die Viskosität der EVF mit Hilfe der Steurspannung immer so eingestellt werden, daß bei allen Betriebszuständen eine optimale Dämpfung erreicht wird. Dazu ist ein Regelkreis notwendig, der mit Hilfe geeigneter Sensoren (z.B. Weg-, Geschwindigkeits- oder Beschleunigungsaufnehmer) den jeweiligen Bewegungszustand des hydraulischen Systems erfassen kann und über eine Regelalgorithmus die zur optimale Viskositätssteuerung notwendige Spannung erzeugt.

Durch den Einbau solcher Bewegungssensoren einschließlich der dazugehörigen Meßkabel und Meßgeräte wird der Gesamtaufbau des hydraulischen Systems aufwendiger, komplizierter und möglicherweise auch störanfälliger, insbesondere auch dann, wenn die Montage an schwerzugänglichen Stellen erfolgen muß.

Hier setzt die Erfindung ein. Es lag die Aufgabe zugrunde, eine einfache Möglichkeit zur Kontrolle und Regelung des hydraulischen EVF-Systems zu finden, ohne daß der zusätzliche Einbau von Bewegungssensoren erforderlich wird. Dadurch wird eine einfache kompakte Bauweise des gesamten hydraulischen Systems ermöglicht.

Die erfindungsgemäße lösung ist im Patentanspruch 1 angegeben; die abhängigen Ansprüche anthalten weitere Ausgestaltungen. Somit wird mit Hilfe der bereits vorhandenen Elektroden, die zur Viskositätssteuerung der EVF in dem hydraulischen System dienen, gleichzeitig ein elektrisches Stromsignal erzeugt, das in einem weiten Bereeich proportional ist zum Betrag der Durchflußgeschwindigkeit der EVF zwischen festen Elektroden oder proportional ist zum Betrag der Relativegeschwindigkeit zweier oder mehrerer gegeneinander verschiebbarer Elektroden. Im ersten Fall ist das elektrische Signal auf die als Folge der mechanischen Bewegung zwischen den Elektroden hindurchströmende EVF zurückzuführen, während es sich im zweiten Fall um einen Verschiebungsstrom handelt, der durch die Beweung der Elektroden in der polarisierten EVF erzeugt wird. Die zwischen den beiden Elektroden liegende EVF-Schicht bildet also zusammen mit einem Strommeßgerät im äußeren Schleißungskreis einen Bewegungssensor. Das Sensorsignal kann zur Kontrolle oder zur Regelung des Bewegungszustandes des hydraulischen Systems ausgenutzt werden, beispielsweise für eine geschwindigkeits- und/oder frequensabhängige Regelung eines Stoß- oder Schwingungsdämpfers.

Das bewegungsabhängige Signal erhält man vorzugweise durch Messung des bewegungsabhängigen Anteils der elektrischen Leitfähigkeit der zwischen den Elektroden befindlichen EVF. Die Messung der Leitfähigkeit erfolgt durch Messung der Elektrodenspannung (z.B. über eine Reihe von Widerständen, die als Spannungsteiler geschaltet sind) und durch Messung des Elektrodenstroms (z.B. durch Messung des Spannungsabfalls an einem in den Elektrodenstromkreis geschalteten Vorwiderstand). Um ein der elektrischen Leitfähigkeit analoges elektrisches Signal zu erhalten, muß das Stromsignal in einer besonderen Schaltung durch die Elektrodenspannung dividiert werden, beispielsweise mit Hilfe eines handelsüblichen integrierten Dividier-Bausteins. Das so gewonnene Meßsignal kann vorteilhaft zur Regelung oder Steuerung der Viskosität der EVF-Schicht herangezogen werden. Zu diesem Zweck wird das der Leitfähigkeit der EVF-Schicht entsprechende Meßsignal mit einem Sollwert verglichen und die Differenzspannung zur Steuerung eines Hochspannungsgerätes benutzt, das eine variable von der Steuerspannung abhängige Ausgangsspannung liefert. Die Ausgangsspannung wird an die Elektroden der EVF-Schicht zurückgeführt und beeinflußt wiederum die Viskosität. Ungewöhnlich ist bei dieser Regelung, daß der Meßfühler für die Bewegung d.h. die EVF-Schicht mit den zugehörigen Elektroden zugleich das Stellglied für die Beeinflussung der Bewegung bildet.

Für den Fall, daß keine Regelung vorgesehen ist und mit konstanter Elektrodenspannung gearbeitet werden kann genügt die Strommessung im äußeren Schließungskreis um einen einfachen Bewegungssensor zu realisieren.

Die Erfindung beruht grundsätzlich auf der Beobachtung, daß der durch die EVF fließende Strom bei konstanter Temperatur nicht zur von der angelegten Spannung, bzw. der elektrischen Feldstärke und der Elektrodengeometrie (Elektrodenfläche und Abstand der Elektroden) abhängt, sondern auch von der Relativgeschwindigkeit der EVF in Bezug auf die Elektroden. Das gilt sowohl für die zwischen zwei festangeordneten Elektrodenflächen strömnde EVF (wie z.B. in einem EVF-Hydraulikventil) als auch für die Relativegeschwindigkeit zweier Elektrodenflächen, die sich in einer EVF gegeneinander bewegen (wie z.B. in einem mit einer EVF gefüllten Stoßdämpfer, dessen Elektrodenflächen von der inneren Zylindermantelfläche und der Mantelfläche des bewegten Kolbens gebildet werden können). In beiden Fällen wird die von den Elektrodenflächen begrentzte EVF einer Scherung, bzw. einer Deformation ausgesetzt, die der Relativegeschwindigkeit zwischen Elektroden und EVF proportional ist. Diese Scherung bewirkt eine Veränderung der elektrischen Leitfähigkeit der EVF im Vergleich zum Ruhezustand. Da es sich bei den EVF i.a. um Dispersionen handelt, sind verschiedene Mechanismen denkbar, die zu einer Änderung der Leitfähigkeit mit der Scher- oder Deformationsgeschwindigkeit führen können, z.B. Zerstören einer Struktur, Deformation der die dispergierten Teilchen umgebenden Ionenwolken bei Scherung oder elektrophoretische Mechanismen des Ladungstransports.

Die Änderung der Leitfähigkeit mit der Scher-oder Deformationsgeschwindigkeit hängt davon ab, ob an die Elektroden eine Gleichspannung oder Wechselspannung angelegt wird.

Mit Gleichspannung beobachtet man i.a. eine deutliche Zunahme der Leitfähigkeit und damit des Stromes mit zunehmender Schergeschwindigkeit, mit Wechselspannung i.a. dagegen eine Abnahme. Die Leitfähigkeitsänderung hängt nur vom Betrag der Schergeschwindigkeit ab, nicht aber von deren Richtung. Das zeigt sich deutlich bei periodischen Schwingungsbewegungen der Flüssigkeit oder der Elektroden, wie sie beispielsweise in hydraulischen Stoßdampfern, Schwingungsdämpfern oder Lagerungen auftreten.

In den folgenden Abbildungen soll die Funktionsweise der erfindungsgemäßen Bewegungsmessung zunächst anhand einfacher Beispiele näher erläutert werden. Danach wird in weiteren Beispielen beschrieben, wie das an den Elektroden abgegriffene Bewegungssignal zur Regelung des Hydraulischen Systems ausgenutzt werden kann.

Es zeigen:

Fig. 1 einen schematischen Längsschnitt durch einen Teil eines hydraulischen, mit einer elektroviskosen Flüssigkeit gefüllten Systems mit zwei festen Elektroden und einer Schaltung zur Strommessung.

Fig. 2 den Zusammenhang zwischen der Durchflußgeschwindigkeit der EVF in dem Strömungskanal des hydraulischen Systems (Fig. 2a) und dem gleichzeitig bei konstanter Elektrodenspannung gemessenen Stromsignal (Fig. 2b).

Fig. 3 den gleichen Zusammenhang wie bei dem Versuch gemäß Fig. 2, jedoch mit doppelt so großer Elektrodenspannung.

Fig. 4 eine Schaltung zur Messung der Leitfähigkeit der elektroviskosen Flüssigkeit mit einer selbsttätigen Nachregelung der Elektrodenspannung und damit der Dämpfung des hydraulischen Systems.

Fig. 5 ein weiteres Schaltungsbeispiel für die analoge Division des Stromsignals durch das Spannungssignal auf der Basis eines Optokopplers zusammen mit der Nachregelung der Elektrodenspannung.

Fig. 6 den Zusammenhang zwischen der Durchflußgeschwindigkeit der EVF im Strömungskanal und dem gemessenen Stromsignal, wenn der Anstieg des Stromsignals mit zunehmender Elektrodenspannung mit einr Schaltung nach Fig. 4 oder 5 gerade kompensiert wird und

Fig. 7 prinzipiell den gleichen Zusammenhang wie in Fig. 2, jedoch bei Betrieb der Elektroden mit einer Wechselspannung konstanter Amplitude.

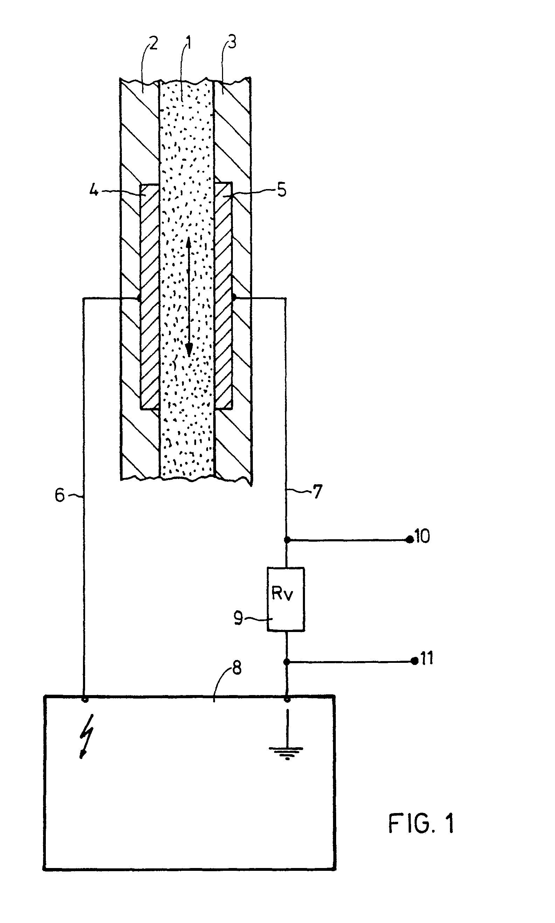

Gemäß Fig. 1 befindet sich die EVF in einem Kanal 1, der von den Wänden 2, 3 begrenzt wird, und der beispielsweise die zwei Kammern eines hydraulischen Stoßdämpfers, Schwingungsdämpfers oder einer hydraulischen Zweikammer-Motorlagerung miteinander verbindet. Die in die Wände 2 und 3 isoliert eingebauten Elektroden 4, 5 sind über die Zuleitungen 6, 7 mit dem Hochspannungsgerät 8 verbunden, mit dessen Hilfe eine beliebige konstante Gleichspannung U, bzw. Feldstärke E eingestellt wird. Zur Strommessung schaltet man am einfachsten einen passend dimensionierten Widerstand $R_v$ 9 in die erdnahe Zuleitung 7 und greift zwischen den Punkten 10, 11 die dem Strom I proportionale Signalspannung $U_{Sig} = R_v \cdot I$ ab. (Einige handelsübliche Hochspannungsgeräte besitzen bereits einen analogen Strommonitorausgang).

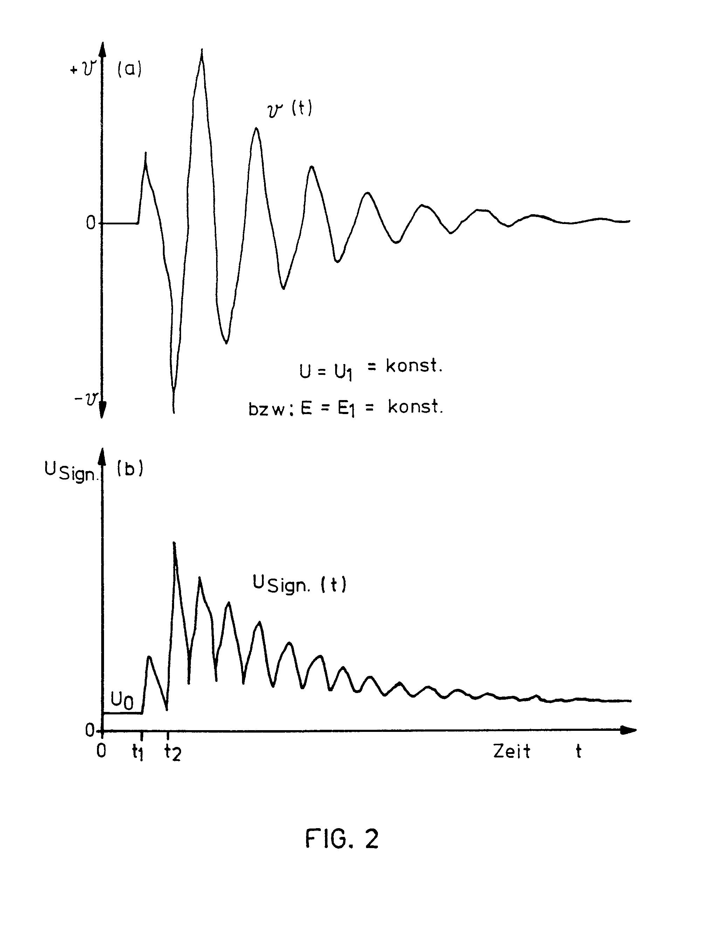

Abb. 2 zeigt an einem typischen Beispiel aus der Praxis den Zussammenhang zwischen (a) der Durchflußgeschwindigkeit v(t) der EVF in dem Kanal 1 und (b) dem gleichzeitig bei konstanter Elektrodenspannung $U = U_1$ gemessenen Sromsignal $U_{Sign}$. (t). Zur Zeit t = O bis t = $t_1$ befindet sich das hydraulische System (z.B. hyraulisches Zweikammerlager) in Ruhe (v = O). Es fließt ein verhältnismäßig geringer Ruhestrom $I_0$, der am

Widerstand 9 die Signalspannung $U_0$ erzeugt. Im Zeitintervall $t_1$ bis $t_2$ wird das hydraulische System durch eine äußere Kraft angestoßen und schwingt für $t > t_2$ mit einer Folge positiver und negativer Schwingungsamplituden v(t) frei aus (Abb. 2a). Das Stromsignal $U_{Sign.}$ (t) folgt dem Verlauf der Strömungsgeschwindigkeit mit guter Näherung, allerdings unabhängig von der Richtung der Strömung, so daß man in Abb. 2b nur eine Folge von Signalamplituden gleichen Vorzeichens beobachtet. Der bewegungsabhängige Anteil des Signals ist die Differenz $U_{Sign.}$ (t) $- U_0$, die bei konstanter Elektrodenspannung $U = U_1$ dem Betrag der Durchflußgeschwindigkeit v(t) proportional ist, d.h. es gilt die Beziehung.

$$(1) \quad /V/(t)/ \approx A \cdot (U_{Sign.} (t) - U_0)$$

mit dem Proportionalitätsfaktor A, der für jedes hydraulische System experimentell bestimmt werden kann.

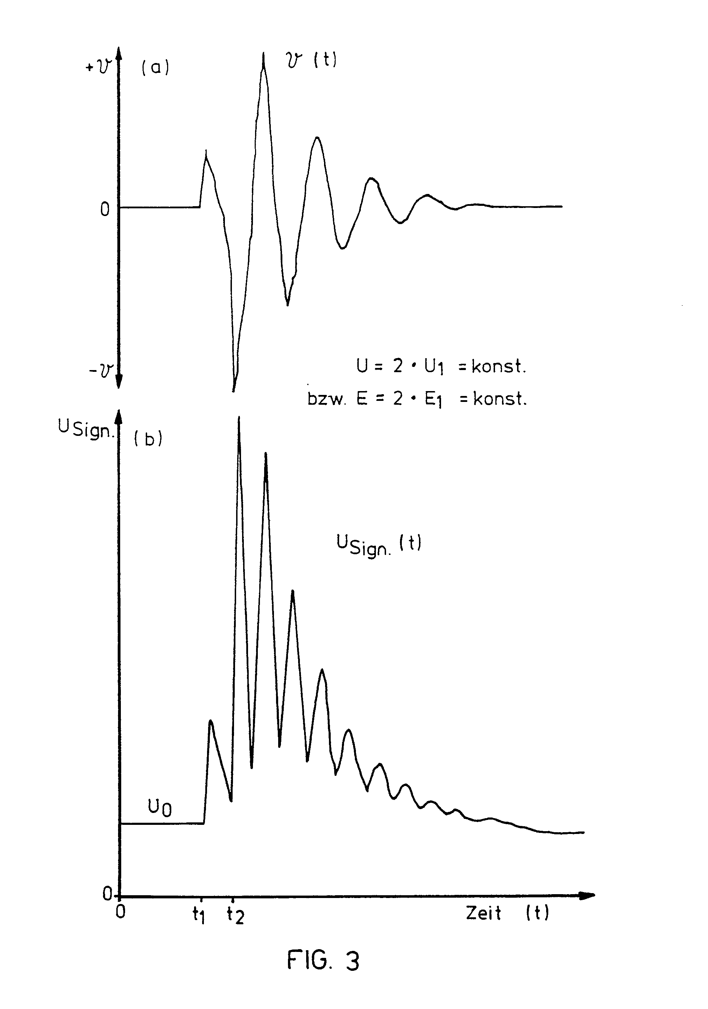

In der Praxis wird das hydraulische System mit unterschiedlichen Elektrodenspannungen betrieben, um die Viskosität der EVF den jeweiligen Erfordernissen anzupassen. In diesem Fall muß die Spannungsabhängigkeit des Stroms berücksichtigt werden, die für die EVF gemessen werden kann. In erster Näherung kann man jedoch Proportionalität zwischen Strom, bzw. Stromsignal und Elektrodenspannung annehmen, wie man beim Vergleich der Abb. 2b und 3b erkennen kann. In Abb. 3 wurde der oben beschriebene Versuch mit der doppelten Elektrodenspannung $U = 2 \cdot U_1$ bei sonst gleichen Bedingungen wiederholt. Bei vergleichbaren Amplituden der Durchflußgeschwindigkeit v(t) wird jetzt das Stromsignal $U_{Sign.}$ (t) $- U_0$ etwas mehr als doppelt so hoch wie in Abb. 2b, d.h. der Quotient aus Strom und Spannung, der der elektrischen Leitfähigkeit entspricht, kann als angefähres Maß für die Durchflußgeschwindigkeit der EVF verwendet werden. Anstelle er Beziehung (1) tritt nun die Näherungsgleichung

$$(2) \quad /v(t)/ \approx A \cdot \frac{U_{Sign.} (t) - U_0}{U(t)}$$

In (2) kann die Elektrodenspannung auch zeitlich veränderlich sein: $U = U(t)$.

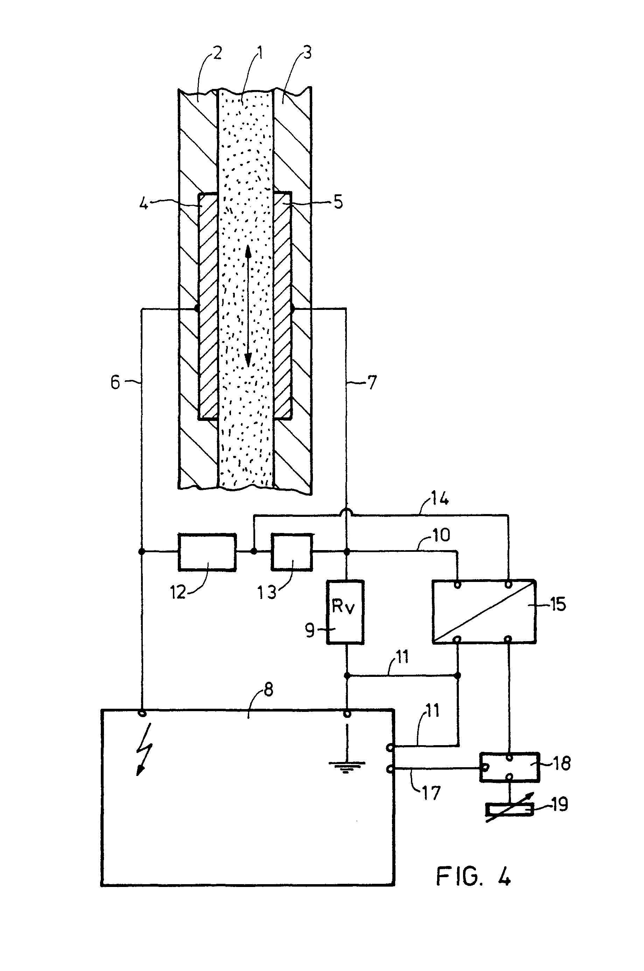

Zur praktischen Anwendung der Beziehung (2) Kontrolle und Regelung des Beweungszustandes eines hydraulischen Systems kann die Division des bewegungsabhängigen Anteils des Stromsignals $U_{Sign.}$ (t) $- U_0$ durch die Elektrodenspannung U(t) entweder analog oder mit Hilfe von AD-, bzw. DA-Konvertern und Mikroprozessoren auch digital durchgeführt werden. Dazu muß die an den Elektroden anliegende Hochspannung U(t) über geeignete Spannungsteiler in den Niederspannungsbereich geteilt werden. Einige handelsübliche Hochspannungsgeräte besitxen bereits einen Spannungsmonitorausgang (z.B. 0—10 V), der für diese Zwecke genutzt werden kann. Das Hochspannungsgerät (8) muß ferner einen entsprechenden analogen Steueringang besitzen, über den die erforderliche Hochspannung eingestellt werden kann. Die analoge Division des Stromsignals und des Spannungsmonitorsignals kann am einfachsten mit Hilfe eines handelsüblichen integrierten Dividierbausteins durchgeführt werden, wie in dem Beispiel der Abb. 4 erläutert wird. Die an den Widerständen 12, 13 des Spannungsteilers abgegriffene Elektrodenspannung wird über den Anschluß 14, und das am Widerstand 9 abfallende Stromsignal wird über den Anschluß 10 dem Dividierbaustein 15 zugeführt. Der Quotient der beiden Analogsignale steht am Ausgang 16 als analoges Signal zur Verfügung und kann nach entsprechender Umformung oder Verstärkung zur Steuerung der Hochspannung auf den Steuereingang 17 des Hochspannungsgerätes 8 gelegt werden. Zum Betrieb des erindungsgemäßen Sensors muß auch im Ruhezustand des hyraulischen Systems eine verhältnismäßig geringe Spannung an den Elektroden 4, 5 liegen. Diese Vorspannung lann beispieweise über den Addierer 18 mittels des Potentiometers 19 eingestellt werden. Man stellt zweckmäßigerweise die Vorspannung so ein, daß die daraus resultierende Feldstärke E in der EVF unterhalb der Schwellfeldstärke $E_0$ bleibt und daher noch keine nennenswerte Viskositätserhöhung auftritt. Bei einer Bewegung des hydraulischen Systems infolge einer äußeren Krafteinwirkung erfolgt eine Bewegung der EVF zwischen den Elektroden 4, 5, die aufgrund der damit verbundenen Änderung der Leitfähigkeit erkannt und von der Schaltung in ein entsprechendes Steuersignal umgesetzt wird. Das Steuersignal kann beispielsweise eine Erhöhung der Ausgangsspannung des Hochspannungsgerätes 8 bewirken, was zu einer entsprechenden Viskositätserhöhung der EVF und damit zu einer höheren Dämpfung des hydraulischen Systems führt. Die mit der Spannungserhöhung verbundene Stromerhöhung wird im Dividierbaustein 15 kompensiert, so daß ein Aufschaukeln der Elektrodenspannung durch Rückkopplung vermeiden wird. Bei Abnahme der Leitfähigkeit infolge der höheren Dämpfung des hydraulischen Systems verringert sich auch die Elektrodenspannung auf den eingestellten Anfangswert. Ein besonderer Vorteil dieser Regelung liegt darin, daß die EVF-Schicht mit den Elektroden 4 und 5 gleichzeitig das Meßglied und das Stellglied bildet. Das Meßsignal ist dabei, wie oben beschrieben, die mit einem Sollwert verglichene Leitfähigkeit der EVF-Schicht; das Regelsignal ist die vom Meßsignal abhängige Ausgangsspannung des Hochspannungsgerätes 8.

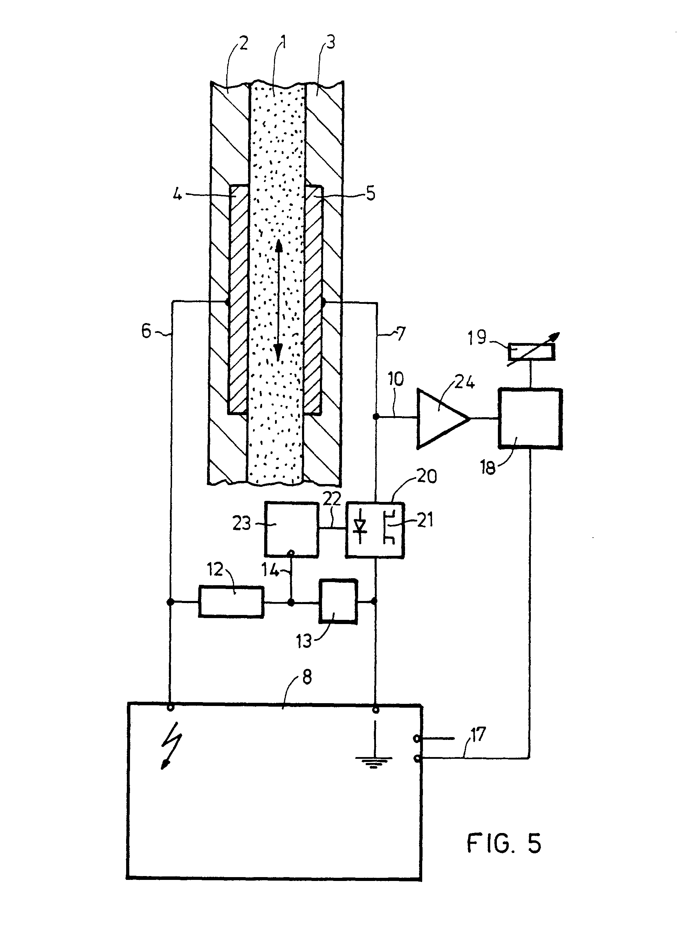

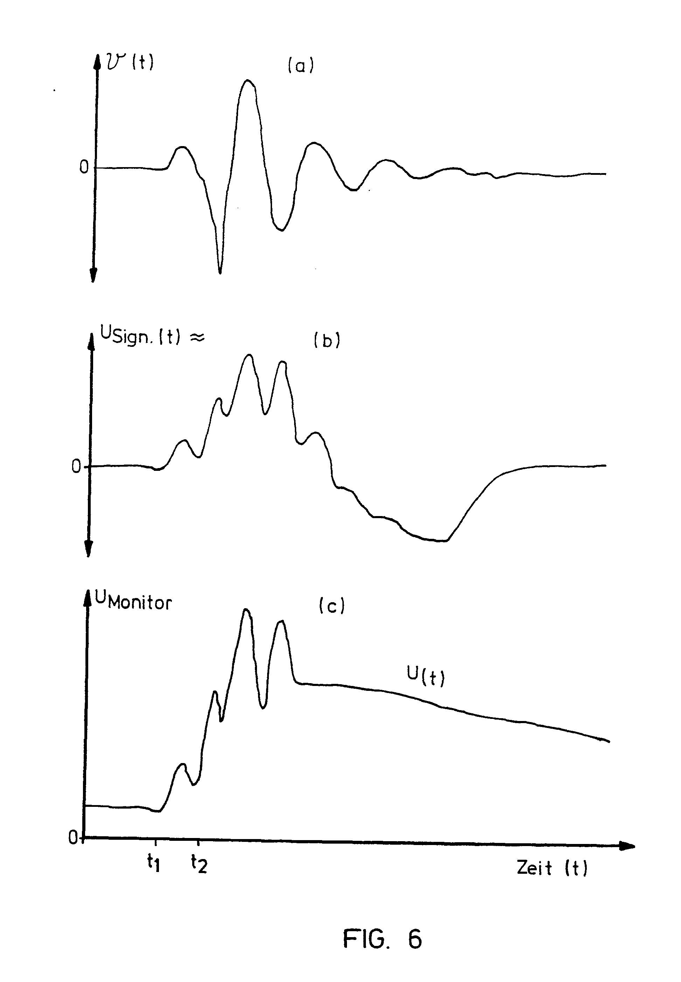

Abb. 5 zeigt ein weiteres einfaches Beispiel für die Durchführung der analogen Division des Stromsignals und des Spannungsmonitorsignals und ihre Anwendung zur Regelung des hydraulischen Systems. Anstelle des festen Vorwiderstands $R_v$ 9 schaltet man in die Leitung 7 einen Optokoppler 20 mit variablen Widerstand 21, der über die Helligkeit einer Leuchtdiode 22 gesteuert wird. Die am Spannungsteiler 12, 13 abgegriffene Elektrodenspannung bzw. die Monitorspannung wird über 14 und die Optokoppler-steuerung 23 zur Steuerung des variablen Vorwiderstandes $R_v$ benutzt. Auf diese Weise wird der Vorwiderstand mit zunehmender Elektroden- bzw. Monitorspannung kleiner und damit auch der durch den Strom I bedingte Spannungsabfall $U_{Sign.}$ (t), so daß der Anstieg des Stromsignals mit zunehmender Elektrodenspannung gerade kompensiert wird. Die Wirkungsweise dieser Schaltung entspricht der oben beschreibenen. Abb. 6 zeigt dafür ein Beispiel. Der in den Abb. 1 und 2 beschriebene Versuch wurde mit der Schaltung in Abb. 5 widerholt. Die Vorspannung der Elektroden 4, 5 wurde im Ruhezustand des hydraulischen Systems eingestellt. Zum Ziepunkt $t_1$ wird das System angestoßen. Kurve b zeigt den zeitlichen Verlauf des über 24 verstärkten Spannungsabfalls am Widerstand 21 des Optokopplers (anstatt der Differenz $U_{Sign.}$ (t) − $U_0$ wurde der Wechselspannungsanteil des Signals $U_{Sign.}$ (t) verwendet). Kurve c zeigt den Verlauf der Monitorspannung des Hochspannungsgerätes 8, der proportional zu der Elektrodenspannung ist. Die Elektrodenspannung wird beim Einsetzen der Bewegung entsprechend der Signalamplitude erhöht bzw. nimmt mit abnehmender Signalamplitude, d.h. abnehmender Geschwindigkeit ab. Wegen der geringen Leitfähigkeit der EVF im Ruhezustand dauert die Entladung des Hochspannungsgerätes entsprechend lange.

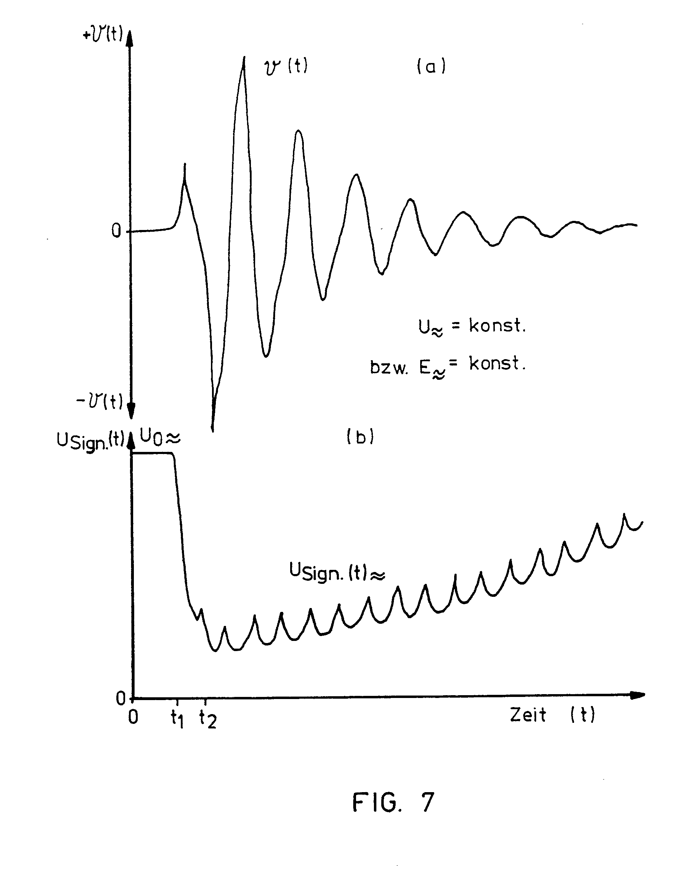

Abb. 7 demonstriert, daß man auch bei Betrieb der Elektroden mit Wechselspannung Änderungen der elektrischen Leitfähigkeit bzw. des Stroms mit der Durchflußgeschwindigkeit der EVF bzw. der Relativegeschwindigkeit der Elektroden in Bezug auf die EVF geobachten kann. Kurbe b zeigt den zeitlichen Verlauf der Geschwindigkeit v(t) und b, den der Wechselstromamplitude (nach Gleichrichtung und Glättung). Im Ruhezustand t = 0 bis t = $t_1$ ist der effektive Strom verhältnismäßig hoch. Mit dem Einsetzen der Bewegung bei t = $t_1$ nimmt die Wechselstromleitfähigkeit ab und steigt allmälich mit dem Abklingen der Schwingungen auf den alten Wert an. Dabei entspricht jedem Maximum des Geschwindigkeitsbetrages ein relatives Minimum des Stroms bzw. der Leitfähigkeit. Der Zusammenhang zwischen Strom und Geschwindigkeitsbetrag ist hier nicht linear. Auch diese Leitfähigkeitsändergung läßt sich in entsprechenden Schaltungen nach den Abb. 4 und 5 zur Regelung ausnutzen. Die frequenz der Wechselspannung sollte dabei allerdings größer sein als die Frequenz der zu steuernden mechanischen Schwingungen.

Die angegebenen Beispiele zeigen bereits, daß sich die an den Elektroden abgegriffenen Strom- und Spannungssignale mit einfachen elektronischen Schaltungen umformen und zur Messung und Regelung des Bewegungszustandes eines hydraulischen Systems ausnutzen lassen. Die Schaltungen lassen sich noch beliebig verbessern und an die jeweiligen Anforderungen anpassen, z.B. läßt sich die einfache Division des Stromsignals durch das Spannungsmonitorsignal durch eine genauere elektronische Nachbildung der gemessenen Strom-Spannungs-Kennlinie der EVF ersetzen.

Bevorzugt läßt sich die Erfindung bei hydraulischen Systemen anwenden, bei denen eine geschwindigkeitzabhängige Steuerung oder Regelung erforderlich z.B. bei Schwingungsdämpfern, Stoßdämpfern oder Lagergungen, da die Dämpfung proportional zur Durchflußgeschwindigkeit der Hydraulikflüssigkeit ist.

Die Änderungen des Stroms bzw. der Leitfähigkeit sind nicht nur bei großen Änderungen der Strömungsgeschwindigkeit der EVF bzw. der Relativgeschwindigkeit zu beobachten, sondern auch bei sehr kleinen Erschütterungen des Systems, bei denen die EVF zwischen den Elektroden nur oszillatorische Bewegungen sehr kleiner Amplituden ausführt.

Zur weiteren Verbesserung der Regelung des hydraulischen Systems kann mit Hilfe der gemessenen Signale nicht nur die Amplitude, sondern auch die Frequenz der Schwingungen eines Systems gemessen und für Regelungszwecke ausgenutzt werden.

Zu diesem Zweck wird das Stromsignal parallel einem handelsüblichen Frequenzmesser, Frequenzanalysator oder entsprechenden elektronischen Schaltungen (Filter, Diskriminator usw.) zugeführt.

## Patentansprüche

1. Vorrichtung zur Messung und/oder Regelung der Bewegung mechanischer Bauelemente in hydraulischen, mit elektroviskosen Flüssigkeiten EVF arbeitenden Systemen, insbesondere ·Schwingungsdämpfern, Stoßdämpfern, Lagerungen oder Kupplungen, die einem mit Elektroden (4, 5) versehenen Strömungskanal (1) oder relativ zueinander bewegte Elektroden aufweisen und an den Elektroden (4, 5) eine elektrische Spannung anliegt, dadurch gekennzeichnet, daß die Meßstrecke für die Bewegung durch die beiden Elektroden (4, 5) und die dazwischen liegende EVF-Schichte (1) gebildet wird und die Elektroden (4, 5) mit einer Schaltung (9, 10, 11) zur Messung der durch die Bewegung verursachten Stromaufnahme verbunden ist.

2. Vorrichtung nach Anspruch 1, dadurch gekennzeichnet, daß zusätzlich zu der Strommessung eine Spannungsmessung an den Elektroden (4, 5) vorgesehen ist und als Meßgröße für die Bewegung der in erster Näherung von der Elektrodenspannung unabhängige Quotient Strom/Spannung gebildet wird, der entweder in digitaler Form oder als analoges Signal vorliegt und der Leitfähigkeit der zwischen den Elektroden (4, 5) liegenden EVF-Schicht (1) entspricht.

3. Vorrichtung nach Anspruch 2, dadurch gekennzeichnet, daß ein Regelkreis vorgesehen ist, bei dem die gemessene Leitfähigkeit der EVF-Schicht (1) mit einem Sollwert verglichen wird, das Differenzsignal über den Steuereingang (11, 17) die Ausgangsspannung eines Hochspannungsgerätes (8) steuert und die Augangsspannung über die Elektroden (4, 5) der gleichzeitig als Meßglied und Stellglied wirkenden EVF-Schicht (1) zugeführt wird.

4. Vorrichtung nach Anspruch 2 bis 3, dadurch gekennzeichnet, daß in einer der beiden Elektroden-Zuleitungen (6, 7) ein variabler Vorwiderstand (21) angeordnet ist, der durch eine Leuchtdiode (22) in der Weise gesteuert wird, daß der durch die Zunahme der Elektrodenspannung bedingte Ansteig des Stromsignals gerade kompensiert wird.

5. Vorrichtung nach Anspruch 1 bis 4, dadurch gekennzeichnet, daß neben der Strom- bzw. Spannungsmessung eine Schaltung zur Frequenzmessung des Stromsignals vorgesehen ist.

**Revendications**

1. Dipositif pour mesurer et/ou régler le déplacement d'éléments de constructions mécaniques dans les systèmes hydrauliques fonctionnant avec des liquides électrovisqueux (LEV) et, en particulier, dans les amortisseurs de vibrations, les amortisseurs de chocs, les paliers ou les accouplements présentant un canal d'écoulement (1) pourvu d'électrodes (4, 5) ou possédant des électrodes se déplaçant relativement l'une par rapport à l'autre, tandis qu'une tension électrique est appliquée aux électrodes (4, 5), catactérisé en ce que la distance mesurée pour le déplacement est constituée par les deux électrodes (4, 5) et la couche de LEV (1) qui se trouve entre elles, et que less électrodes (4, 5) sont connectées à un circuit (9, 10, 11) pour mesurer la consommation de courant provoquée par le déplacement.

2. Dispositif selon la revendication 1, caractérisé en ce qu'il est prévu, outre la mesure de courants une mesure de tension aux électrodes (4, 5) et que la grandeur de mesure du déplacement est constituée par la quotient courant/ten-sion qui est indépendant, en première approximation, de la tension d'électrodes, ce quotient se présentant sous forme numérique ou de signal analogique et correspondant à la conductibilité de la couche de LEV (1) située entre les électrodes (4, 5).

3. Dispositif selon la revendication 2, caractérisé en ce qu'il est prévu un circuit de régulation dans lequel la conductibilité mesurée de la couche de LEV (1) est comparée à une valeur de consigne, que le signal différentiel commande la tension de sortie d'un appareil à haute tension (8) par l'entrée de commande (11, 17), et que la tension de sortie est amenée par les électrodes (4, 5) à la couche de LEV (1) qui joue simultanément le rôle d'élément de mesure et d'élément de réglage.

4. Dispositif selon les revendications 2 et 3, caractérisé en ce qu'une résistance préliminaire variable (21) est disposée dans l'un des deux conducteurs d'alimentation (6, 7), cette résistance étant commandée par une diode luminescente (22), de façon à ce que l'augmentation du signal de courant dépendant de l'augmentation de la tension d'électrodes se trouve ainsi compensée.

5. Dispositif selon les revendications 1 à 4, caractérisé en ce qu'un circuit pour la mesure de fréquence du signal de courant est prévu, outre la mesure de courant et de tension.

**Claims**

1. Apparatus for measuring and/or regulating the movement of mechanical structural elements in hydraulic systems operating with electrovis-cous fluids EVF, in particular vibration dampers, shock absorbers, bearings or couplings, which have a flow channel (1) provided with electrodes (4, 5) or have electrodes which are moved relative to one another and an electric voltage is applied to the electrodes (4, 5) (sic), characterised in that the measuring zone for the movement is formed by the two electrodes (4, 5) and the EVF layer (1) in between the electrodes (4, 5) is (sic) connected to a circuit (9, 10, 11) for measurement of the current consumption due to the movement.

2. Apparatus according to Claim 1, characterised in that, in addition to the current measurement, a voltage measurement is provided on the electrodes (4, 5), and the quotient current/voltage, which in a first approximation is independent of the electrode voltage, is calculated as a variable for the movement, the said quotient being in digital form or in the form of an analog signal and corresponding to the conductivity of the EVF layer (1) present between the electrodes (4, 5).

3. Apparatus according to Claim 2, characterised in that a control loop is provided, in which the measured conductivity of the EVF layer (1) is compared with a setpoint value, the differential signal controls the output voltage of the high-voltage unit (8) via the control input (11, 17) and the outward voltage is fed via the electrodes (4, 5) to the EVF layer (1) which simultaneously acts as a measuring element and final control element.

4. Apparatus according to Claims 2 and 3, characterised in that a variable series resistance (21) is arranged in one of the two electrode supply lines (6, 7), the said resistance being controlled by a light emitting diode (22) in such a way that the increase in the current signal as a result of the increase in the electrode voltage is just compensated.

5. Apparatus according to Claims 1 to 4, characterised in that a circuit for measuring the frequency of the current signal is provided in addition to the current or voltage measurement.

FIG. 1

FIG. 2

$U = 2 \cdot U_1 = \text{konst.}$

bzw. $E = 2 \cdot E_1 = \text{konst.}$

FIG. 3

EP 0 238 942 B1

FIG. 4

4

FIG. 5

FIG. 6

FIG. 7